# EUROPEAN PATENT SPECIFICATION

(11) **EP 0 731 650 B1**
(45) Date of publication and mention of the grant of the patent: **23.08.2000**
(21) Application number: 95902877.0
(22) Date of filing: 09.12.1994
(51) Int. Cl.: A23P 1/08

(54) **IMPROVEMENTS IN AND RELATING TO COATING FOOD PRODUCTS**
NAHRUNGSMITTEL BESCHICHTUNGSVERFAHREN
AMELIORATIONS APPORTEES A L'ENROBAGE DE PRODUITS ALIMENTAIRES

(30) Priority: 10.12.1993 GB 9325280
(43) Date of publication of application: 18.09.1996
(73) Proprietor: UNITED BISCUITS (UK) LIMITED, West Drayton, Middlesex UB7 7PR (GB)
(72) Inventor: BARNES, Oliver John, High Wycombe, Bucks HP15 6BP (GB); SELWYN-SMITH, Jerome Selwyn, Wokingham, Berkshire RG11 1HW (GB); WILKES, Malcolm Stuart, Cookham Dean, Berkshire SL6 9NZ (GB); WARDLE, Marketta, Reading, Berkshire RG2 0EH (GB); WEATHERALL, Ann, Thame, Oxon OX9 3WQ (GB); BATT, Ian, Princes Risborough, Bucks HP27 9AS (GB)
(74) Representative: Humphreys, Ceris Anne
(86) International application number: GB9402701
(87) International publication number: WO9515699

(56) References cited:
- EP-A- 0 235 308
- EP-A- 0 411 174
- FR-A- 484 842
- GB-A- 2 091 532
- US-A- 1 417 086
- K.KULP, R.LOEWE: 'Batters and Breadings in Food Processing' 1990 , AMERICAN ASSOCIATION OF CEREALS CHEMISTS , ST PAUL, USA Pages 199, 213-224

## Description

The invention relates to the individual coating of food products, for example, to the coating of chicken pieces or fish pieces with batter.

It is known to coat individual food products by processes involving dipping the food products into, or passing them through, a reservoir of liquid coating material, for example, batter, but those methods are not satisfactory unless the batter or other coating material has a thin consistency.

GB 2 091 532 discloses mechanically aerating a liquid batter mixture for coating the surface of a food product.

US 1 417 086 discloses a machine for coating confectionery, primarily with chocolate.

The invention provides a process for coating food products, which comprises arranging a succession of food products, spaced apart from each other, on a first support surface, applying a covering layer of a viscous coating material to the food products and to the first support surface so that the coating material adheres to each food product and lies in contact with the first support surface at least over a region surrounding the food product, thereby enclosing the food product between the coating material and the first support surface, applying a layer of viscous coating material so that it rests on a second support surface, removing from the first support surface each food product together with the coating material adhering to it, so placing each partially coated food product on the coating material on the second support surface that the surface of the food product that was resting on the first support surface is in contact with the coating material on the second support surface, the coating material on the second support surface adhering to the partially coated food product and, where it meets it, uniting with the coating material applied to the food product when it was on the first support surface, so that each food product is enrobed in the coating material, and removing the coated food products from the second support surface, the process further comprising mechanically introducing air, or another suitable gas, into the coating material before it is applied to the first and/or second support surfaces.

It will be appreciated that the process of the invention avoids the need to move the food products through the coating material, thus making the process practicable for use with coating materials that are of too thick a consistency to be applied by moving the food products through a mass of the coating material. It will also be realised that, for the process of the invention to operate well, the coating material has to have appropriate flow characteristics, adequate adhesion in relation to the food products and to the second support surface, and usually to the first support surface, and sufficient cohesion (or self-adhesion) to provide the final continuous covering that is desired. The required properties of the coating material are discussed in more detail below, but it will commonly prove to be the case, at least when the coating material is batter, that coating materials that are of consistencies which are rather too thick to be suitable for coating by dipping will prove to be suitable for use with the process of the invention.

In the process of the invention, the first support surface is advantageously provided by an endless conveyor (referred to hereinafter as "the first conveyor") arranged to transport the food products past a station at which the covering layer of viscous coating material is applied.

The food products should be spaced sufficiently far apart from each other on the first support surface to allow the coating material to drop down around each food product onto the support surface so that the coating material comes into contact with, and adheres to, as much of the sides of the food product as possible and also comes into contact with, and lies on, the first support surface over a region surrounding the food product. The extent to which the coating material is able to come into contact with, and adhere to, the sides of the food product is, however, at least partly dependent on the shape of the food product itself, as is discussed below. It may be found advantageous to arrange for the first support surface to pass through means such as a downwardly flowing curtain of air (often referred to as an "air knife") to promote contact between the coating material and the food product and/or between the coating material and the first support surface over a region around each food product. The optimum initial spacing between the food products on the first support surface will depend at least in part on the flow characteristics of the coating material. In addition, when the first support surface is provided by the first conveyor as discussed above, the speed of the first conveyor past the station at which the coating material is applied is a factor in determining the optimum initial spacing between the food products. It will be found, however, that a suitable spacing can readily be ascertained in practice in any particular case.

When the first support surface is provided by the first conveyor as described above, then removal of the food products from the first support surface is advantageously effected by arranging for the food products, when they reach the end (referred to hereinafter as "the front end") of the upper run of the first conveyor, to be carried forward onto an adjacent endless conveyor. Assuming satisfactory coverage of the sides and uppermost surfaces of the food products by the coating material at that stage, and also assuming sufficient adhesion between the coating material and the first support surface, it can be arranged for the layer of coating material to rupture around each food product in the region where the coating material extends from the food product onto the support surface as each food product is removed from the first support surface. When such rupture of the coating material is required, the said adjacent conveyor is advantageously arranged near to, but separated from, the front end of the first conveyor by a gap sufficient to allow the passage through it of the coating material adhering to the first conveyor. Because the food products are relatively rigid as compared with the coating material, the food products, together with the part of the coating material adhering to them, can be effectively peeled off the first support surface leaving the remainder of the coating material still adhering to that surface to pass through the said gap.

Before the partially coated food products are placed on the second support surface, which is advantageously provided by an endless conveyor (referred to hereinafter as "the second conveyor"), the food products may be arranged to encounter further means for promoting contact between the coating material and each of the food products. Thus, when conveyors are used as described above, the conveyor adjacent to the first conveyor and onto which the food products are transferred from the first conveyor may be an intermediate transfer conveyor arranged to transport the food products to the second support surface. The time spent on such a transfer conveyor can enable the coating material to drop further down around each food product and to come into contact with, and adhere to, a greater area of the food product. In addition, if it were found necessary to neaten or trim the edges of the coating material then that could be effected on the transfer conveyor. The provision of such a transfer conveyor may not, however, be required, and the said adjacent conveyor may be the second conveyor which provides the second support surface. To promote contact between the coating material and the sides of each of the food products, the food products may be arranged to pass through means such as an air knife (or downwardly flowing curtain of air) in the region where the food products are removed from the first support surface.

With certain shapes of food products, for example, thick food products having side walls that are inclined outwardly away from each other and from the base of the food product or even having upright side walls, it may be found that air is trapped in the region around the base of the food product between the food product and the covering layer of the coating material on the first support surface. In such cases, instead of rupturing around the base of each food product as the product is removed from the first support surface, it may be found that the coating material tends to rupture higher up the side walls of the product leaving a portion of the side walls exposed and uncoated. On transfer of such a partially coated food product to the second support surface, the coating material on the second support surface may not be able to unite all around the base of the food product with the coating material already on the food product, and a gap in the coating material then results.

When the first support surface is provided by a first conveyor and the food products are transferred onto an adjacent conveyor as described above, which may be the transfer conveyor or the second conveyor, it has been found advantageous with food products so shaped that good coverage of the sides is not otherwise achieved for the front end of the first conveyor (or the outermost surface of the coating material on the front end of the first conveyor) to be arranged so close to the adjacent conveyor that the portion of the layer of coating material in contact with the first support surface over the regions surrounding the food products on the first conveyor, or at least the outermost part of the depth of that portion of the layer, is transferred together with the partially coated food products onto the adjacent conveyor. If the adjacent conveyor is the second conveyor, then that part of the coating material from the first support surface will be superposed on the layer of coating material already resting on the second conveyor. If the adjacent conveyor is the transfer conveyor, then the part of the coating material transferred onto it may, in turn, be tranferred onto the second conveyor, or at least some of it may be separated from the partially coated food products before reaching the second conveyor by passing through a gap between the transfer conveyor and the second conveyor.

Although substantially the entire depth of the portion of the layer of coating material in contact with the first support surface may be transferred in that manner onto the adjacent conveyor, it is advantageous for approximately the outermost half of the depth of the layer to be transferred from the first conveyor to the adjacent conveyor. In that case, the remaining innermost part of the coating material stays on the first conveyor when the food products are transferred onto the adjacent conveyor. The depth of the layer on the adjacent conveyor can be controlled by varying the separation between the conveyors themselves, by varying the initial depth of the layer or layers of the coating material (there will be a layer on each conveyor if the adjacent conveyor provides the second support surface), or, when the separation between the conveyors and the initial depth of the layer or layers are suitably chosen, by varying the relative speed of the conveyors to each other.

An arrangement in which at least the outermost part of the layer of coating material on the first conveyor is transferred onto the adjacent conveyor as described above is especially advantageous if the adjacent conveyor is arranged to move at a slower speed than the first conveyor. With that arrangement, the speed of movement of the food product will decrease as it is transferred from the first conveyor to the adjacent conveyor. During transfer, the food product will initially be moving more quickly than the coating material on the adjacent conveyor so that the coating material immediately in front of the food product is pushed down around the front surface of the product. As the food product slows down, the coating material immediately behind the food product is then moving more quickly than the food product with the result that the coating material is pushed up against the rear surface of the food product. Thus, an improvement in the contact between the coating material and the food product can be obtained resulting in better coverage of the food products by the coating material. It is possible for an improvement in coverage also to be obtained by arranging for the adjacent conveyor to move at a slower speed than the first conveyor (and/or, when there is a transfer conveyor, for the second conveyor to move at a slower speed than the transfer conveyor) even if there is no transfer of the outermost part of the layer of coating material as described above. The difference in speeds between the first conveyor and its adjacent conveyor or conveyors will also affect the optimum initial spacing of the food products on the first support surface described above because the food products will then be more closely spaced on the adjacent conveyor than on the first conveyor.

Although it will be appreciated that the food products on the second support surface are stationary relative to that surface, the food products may move relative to the second support surface during transfer onto it and whilst still in contact with the immediately preceding support surface.

For satisfactory removal of the partially coated food products from the first support surface, it has been found that the radius of curvature of the outer surface of the first conveyor where it turns downwards at the front end should, advantageously, not exceed 7mm and, preferably, should not exceed 5mm.

Immediately prior to transfer of each food product onto the second support surface, generally only the part of the surface of the food product that was resting on the first support surface still remains uncoated. The coating material applied to the second support surface should usually have similar flow characteristics, adhesion and cohesion to that applied to the first support surface. It is advatagesouly of the same chemical composition as that applied to the first support surface and is, preferably, derived from the same source of coating material. When each of the partially coated food products is placed on the coating material resting on the second support surface, coating material adheres to the, as yet, uncoated surface of the food product and unites with the coating material already on the food product. It will be appreciated that the configuration of the surface of the food product is significant at this stage of the process, because, whereas the coating material applied to the food product on the first support surface can fold around and envelop any one of a wide range of differently shaped food products, the part of the surface of the food product that is not covered by the coating material on the first support surface should generally be a substantially planar surface for successful coating on the second support surface to be achieved. If that part of the surface of the food product is not substantially planar then it may be found that an increase in the thickness of the layer of the coating material on the second support surface improves pick-up of the coating material by the food product. Alternatively, or in addition, means for pressing the food products into the layer of coating material on the second support surface may be provided.

Upon removal of each of the food products from the second support surface, which is preferably effected by arranging for the food product to be carried forward onto a further conveyor, the coating material on the second support surface ruptures around the food product. The gap between the second support surface and the said further conveyor (when provided) should be large enough to enable the entire thickness of the layer of coating material on the second support surface to pass through. Thus, the part of the coating material on the second support surface that is adhering to the food product and has united with the coating material from the first support surface is separated from the remainder of the coating material, which stays on the second support surface. The relative rigidity of the food product as compared with the remainder of the coating material on the second support surface can again assist in effecting a peeling away of the coated food products from the second support surface. If desired, means, for example, an air knife, can be provided to ensure good contact between the coating material and the food product on removal of the food product from the second support surface.

In such a manner, it is possible to enrobe each of a succession of food products in a viscous coating material of a relatively thick consistency. In practice, it is of course possible that complete coverage of the food products is not achieved in every single case, but it will generally be found that coverage to an acceptable extent can readily be obtained.

Advantageously, the air or other suitable gas is mechanically introduced into the coating material by supplying coating material to a machine in which the material is whipped as it passes through the machine while air (or another suitable gas, for example, nitrogen or carbon dioxide) is injected into the material. A suitable continuous whipping machine for this purpose is that made and sold by Mondomix Howden B.V.. References throughout the specification to "aerating" or "de-aerating" the coating material, or to the "aeration" or "de-aeration" thereof, are not restricted to references to the inclusion, or removal, of air from coating material but extend to the inclusion, or removal, of other suitable gases, for example, nitrogen or carbon dioxide. References to "air" throughout the specification should also be interpreted as including references to such other suitable gases. The coating material may contain a whipping agent to assist in the formation, and/or retention, of a suitable foam.

When the or each coating material is a batter and is mechanically aerated in the above manner before application to a food product, for example, pieces of frozen chicken or fish, it has been found possible to produce a food product with a coating having a foam-like structure which, when cooked and consumed, breaks down easily in the mouth. It has been found that the size distribution of air cells within the coating material before its application to the food product affects the foam-like structure of the coating on the final coated food product. If an overwhelming majority of those cells is small (say, below 0.10mm in diameter) then a satisfactory foam-like structure will not result. Advantageously, on application to the food products the or each coating material contains air cells at least the majority of which have diameters within the range of from 0.15mm to 0.50mm and, preferably, there is a distribution of diameters over that range. The bulk density of the or each aerated coating material is preferably within the range of from 0.40 to 0.50g/cm³. Whereas, with a given coating material, the coating ability of the material improves as the density increases, that has to be balanced by the fact that as the density is increased so the lightness of the final cooked product is decreased.

Advantageously, coating material remaining on the first and second support surfaces after removal of the food products is recycled. Advantageously, the air or other suitable gas in the coating material to be recycled is substantially removed, or at least its content is considerably decreased, before once again introducing air or another suitable gas into the coating material and reapplying the coating material. Such de-aeration may be achieved by allowing the coating material to fall through a vessel, the interior of which is in communication with a source of reduced pressure. If desired, a greater degree of de-aeration can be achieved by using a device in which the material falls onto a horizontal plate that is rotating about a vertical axis in a chamber which is in communication with a source of reduced pressure. The plate can be surrounded by a circumferentially-extending screen through which the coating material passes under the action of centrifugal force resulting from the rotary motion imparted to it by the plate. That device can also be used without the screen, if desired.

The process of the invention is especially advantageous when the or each coating material is a batter, and more especially when the batter contains one part by weight of heat-treated flour to from 1.26 to 2.01 parts by weight of water. The batter may also contain a whipping agent, for example, one derived from casein or soya. The quantity of whipping agent used should be sufficient for the desired degree of aeration to be readily attained, and will vary depending on the kind of whipping agent and flour used in any particular case. Economic considerations often impose an upper limit on the amount of whipping agent added to the batter, and it will commonly be found that a quantity of whipping agent within the range of from 2% to 4% by weight and based on the weight of the batter will give a satisfactory result.

The food products may be made from chicken, and may be pieces of chicken, or may be made from fish, and may be pieces of fish. The food products may also be made from meat, for example, they may be burgers or sausages. The food products may be frozen prior to coating, in which case adhesion of the coating material to the food products may be assisted by the freezing of the coating material in contact with the food product. Coating materials other than batter can also be used, for example, mashed potato or custard, although with the latter material recycling of the material may prove to be impracticable because the setting of custard is not strictly a reversible process.

Especially when the or each coating material is an aerated batter as referred to above, the coated food products may have a layer of crumbs applied to them after removal from the second support surface. With or without the crumbs, they are advantageously subjected to a further treatment step to set at least the outer layer of the coating material. Thus, the coated food products may be frozen, or they may be flash-fried, that is to say, fried for a time sufficient to set at least the outer layer of the coating material.

Some food products have upper sides and under-sides that are recognised as such by the consumer. For example, in the case of a fillet of fish the recognised upper side is that from which the bone has been removed and the recognised under-side is the side having the skin or from which the skin has been removed. Even when such food products are coated in accordance with the process of the invention, the recognised upper and under-sides are usually still discernible. It is desirable that such food products are coated on the first and second support surfaces with their recognised upper sides uppermost. When such coated food products are to be flash-fried, they are advantageously inverted on entry to a fryer. Inversion has been found to be desirable for two reasons. Firstly, because the coated food products will generally be buoyant in the oil, means such as a transfer grid is provided to assist in conveying the food products through the oil. Contact between the transfer grid and the surface of the food product in the fryer may cause distortion of the coating on that surface. In order for the coated food products to have an attractive final appearance it is therefore preferred that any distortion of the coating is on the recognised under-side of the final flash-fried food product. Secondly, it has been found that if the region of the join between the coating material applied to the food product on the first support surface and that applied on the second support surface is nearer to the transfer grid it is less exposed to turbulence within the oil and the coating in that region is less susceptible to damage.

Several forms of a process for coating food products in accordance with the invention will now be described, by way of example, with reference to the accompanying drawings, in which:
Fig. 1 is a diagrammatic side view of apparatus for coating food products in a first form of the process,
Fig. 2 is a diagrammatic side view of apparatus for coating food products in a second form of the process,
Fig. 3 is a flow diagram for coating food products in a third form of the process; and
Fig. 4 is a portion, shown diagrammatically and enlarged as compared to Fig. 2 of apparatus for carrying out a modification of the second form of the process.

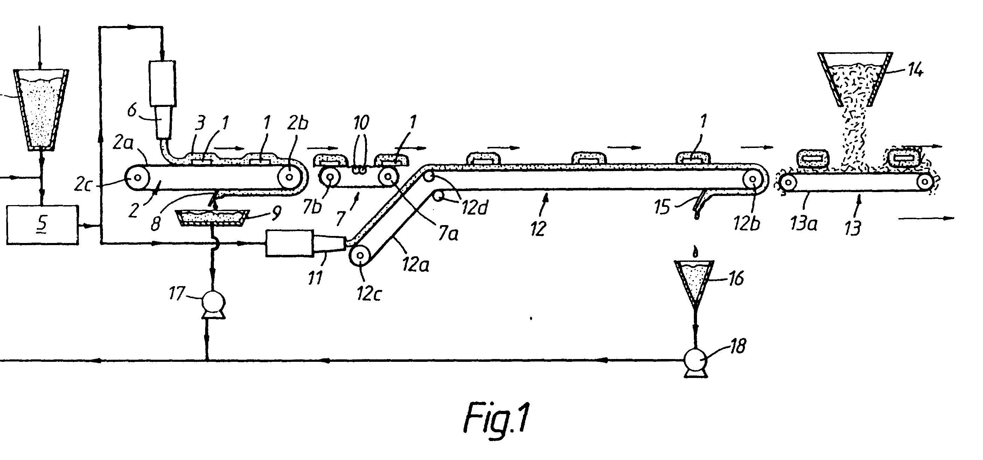

Referring to the accompanying drawings and initially to Fig. 1, a succession of food products 1, for example, pieces of frozen chicken or fish, is placed on a first conveyor, indicated generally by the reference numeral 2. The first conveyor 2 comprises an endless belt 2a made from PVC sheet material, the belt being arranged to travel around a pair of rollers comprising a front roller 2b and a rear roller 2c. The roller 2b may be replaced by a static curved guide, member.

A viscous coating material 3, which may be, for example, a mechanically-aerated batter, is prepared by batch mixing the desired ingredients and feeding the resultant mix to a supply tank 4. From the supply tank 4 the mix is fed continuously by means of a pump (not shown) to a continuous whipping machine 5 (shown schematically), where the mix is whipped and air is injected into it, increasing the thickness of its consistency and decreasing its bulk density to form the viscous coating material 3 referred to above. The increase in the thickness of the coating material's consistency can be controlled by varying the rate of flow of the material through the machine 5, by varying the volume of air injected per unit time into the material while it is passing through the machine, or by varying the whipping speed. A suitable continuous whipping machine for this purpose is that made and sold by Mondomix Howden B.V.

The viscous coating material 3 leaving the continuous whipping machine 5 is fed to a fishtail nozzle 6 having a circular inlet and a rectangular outlet, the coating material 3 emerging from the outlet of the nozzle 6 in the form of a continuous sheet or layer. The outlet of the nozzle 6 is arranged directly above the first conveyor 2 so that the sheet or layer of coating material 3 emerging from the outlet is deposited onto the conveyor 2 and covers each of the food products 1 in turn as well as regions of the surface of the belt 2a surrounding the food products including those regions between adjacent food products. The covering material 3 is soft and pliable enough to fold over and around the upper surfaces and sides of each of the food products 1 and, where it contacts the surface of the food product, it adheres to it and, where it contacts the belt 2a, it also adheres to the surface of the belt. Although the nozzle 6 is shown with its axis pointing vertically downwards, it may instead be arranged with its axis inclined to the vertical.

When each of the food products 1 reaches the front roller 2b of the first conveyor 2, it is carried forward onto an adjacent intermediate transfer conveyor belt, indicated generally by the reference numeral 7. Because the part of the coating material 3 covering the food products 1 adheres to the food products, the part of the coating material on the surface of the belt 2a adheres to the belt and the food products 1 are spaced far enough apart for the coating material to adhere to the belt 2a over a sufficiently large area, the coating material 3 ruptures around the base of the food product as each of the food products is carried forward. Also, it will be appreciated that the food products are relatively rigid as compared to the coating material 3. Thus, partially coated food products 1 are peeled away from the belt 2a onto the transfer belt 7. The remainder of the layer of the coating material is left on the belt 2a and is transported by the belt around the front roller 2b through the gap (shown enlarged for clarity) between the front of the first conveyor 2 and the rear of the transfer belt 7 to a deflector plate 8 on the return run of the conveyor 2, where the coating material is removed from the surface of the belt 2a and is deposited in a collecting tank 9.

The transfer belt 7 is made of an endless band of chain link wire mesh and is arranged to run on front and rear rollers 7a and 7b, respectively. The time spent by the partially coated food products 1 on the transfer belt 7 allows the coating material to drop down around each of the food products and to come into contact with a greater area of each food product. An additional pair of contra-rotating skimming rollers 10 may also be positioned immediately below the wire mesh band to provide trimming or neatening of the coating material on the food products 1, if desired.

Coating material 3 from the whipping machine 5 is also supplied to a further fish tail nozzle 11 similar to the fish tail nozzle 6 but arranged to extrude a continuous sheet or layer of the coating material onto a belt 12a of a second conveyor, indicated generally by the reference numeral 12.

The belt 12a is arranged to run on front and rear rollers 12b and 12c, respectively, and an intermediate pair of rollers 12d, the rear roller 12c being at a lower level than the intermediate rollers 12d and the front roller 12b so that the conveyor 12 has an inclined portion and a flat portion. The outlet of the fishtail nozzle 11 is arranged to extrude the coating material 3 onto the belt 12a as the belt travels up the inclined portion of the conveyor 12, the coating material 3 adhering to the surface of the belt 12a, which is made of PVC sheet material. The intermediate rollers 12d are arranged adjacent to the front roller 7a of the transfer belt 7 (the gap between the transfer belt 7 and the second conveyor 12 being shown enlarged for clarity) so that the food products 1 reaching the front roller 7a with coating material adhering to their upper and side surfaces are carried forward onto the conveyor 12 and deposited onto the layer of coating material 3 on the belt 12a. The coating material 3 on the belt 12a adheres to the uncoated lower surfaces of the food products 1 and unites with the coating material already adhering to the food products.

When each of the food products 1, carried by the belt 12a, reaches the front roller 12b of the second conveyor 12, it is carried forward onto another conveyor 13a of a crumbing station, indicated generally by the reference numeral 13. The coating material 3 on the belt 12a ruptures around each of the food products 1, the part of the coating material adhering to the food product remaining on the food product as it is peeled off the belt 12a onto the conveyor 13a, the remainder of the coating material 3 staying on the belt 12a of the second conveyor 12.

Once on the conveyor 13a, the food products 1 pass beneath a hopper 14 arranged to distribute crumbs onto the conveyor 13a, and onto and around each of the coated food products. From there, the coated food products 1 can be transported to a fryer for flash frying and subsequent freezing. It may be found preferable to invert the food products on entry into the fryer in order to avoid distortion of the upper surface of the food products and to protect the region of the join between the coating material 3 applied on the first conveyor 2 and that applied on the second conveyor 12.

The remainder of the coating material 3 left on the conveyor belt 12a is transported around the front roller 12b and removed from the belt 12a by a deflector plate 15 into a collecting tank 16. Coating material 3 collected in the tanks 9 and 16 is recycled by means of pumps 17 and 18, respectively, back to the inlet of the whipping machine 5.

For the purpose of simplification, the coating of food products in only one line or lane is shown in Fig. 1 and has been described above. In practice, however, several lanes of the food products 1 are arranged to run at the same time, coating material 3 being supplied to each lane from the whipping machine 5.

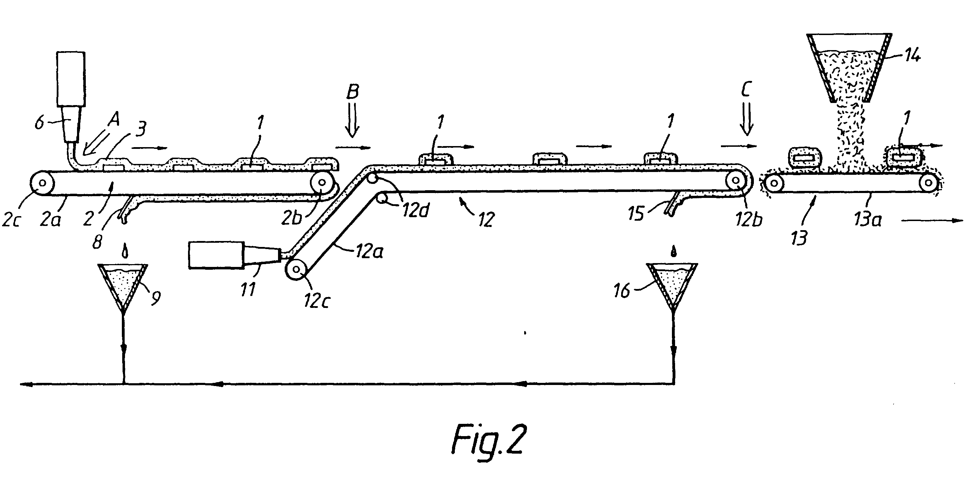

The second form of the process of the invention uses the apparatus shown in Fig. 2. That apparatus is similar to the apparatus shown in Fig. 1 and, where appropriate, the same reference numerals have been used to indicated similar parts of the apparatus. The second form of the process differs from the first form described with reference to Fig. 1 in that, firstly, the transfer belt 7 is omitted in the second form. The front roller 2b of the first conveyor 2 is arranged adjacent to the uppermost part of the inclined portion of the second conveyor 12. Partially coated food products 1 reaching the front end of the first conveyor 2 are carried forward directly onto the layer of coating material 3 on the second conveyor 12, which runs at a slower speed than the first conveyor 2. The layer of coating material 3 on the first conveyor 2 ruptures in the same manner as described with reference to Fig. 1, and the remainder of the layer that is left adhering to the belt 2a after transfer of the food products 1 to the second conveyor 12 passes through the gap between the first conveyor 2 and the second conveyor 12 for deposit in the collecting tank 9. Although a roller 2b is shown at the front of the first conveyor 2, the roller can be replaced by a static curved guide member.

In order to promote good contact between the coating material 3 adhering to the food product 1 and the food product itself, a downwardly flowing curtain of air or "air knife" is positioned where indicated by the arrow B in Fig. 2. Further air knives may also be positioned where indicated by the arrows A and C, respectively, the air knife A being arranged to assist the coating material 3 in contacting the surface of the belt 2a of the first conveyor and to reduce the amount of air trapped between the base of each food product and the belt 2a underneath the coating material. The air knife C is provided to assist in the transfer of the coated food products 1 from the second conveyor 12 to the crumbing station 13.

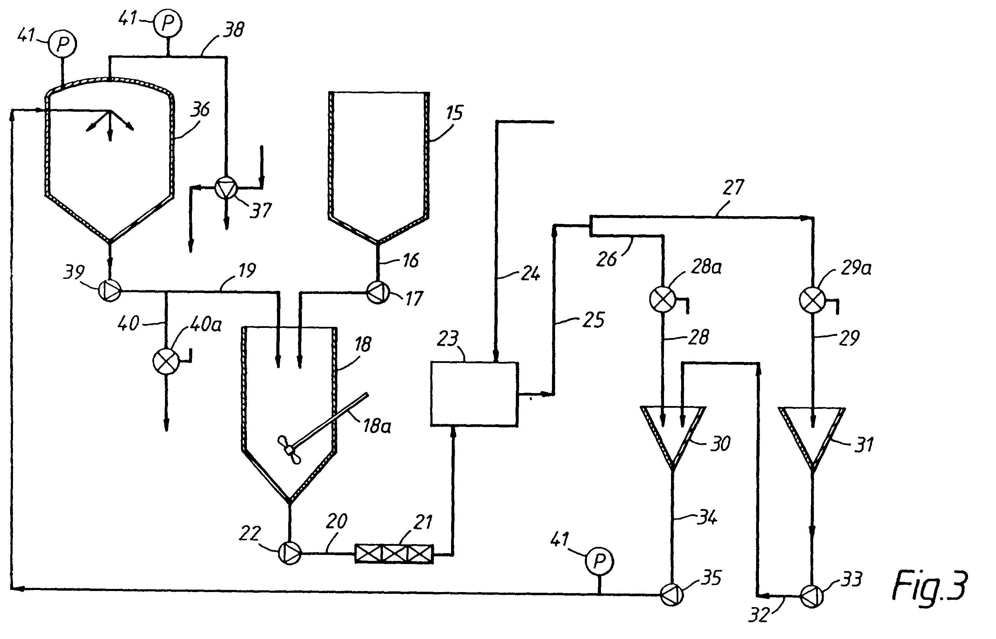

With reference to Fig. 3, in a third form of the process, a mix of the desired ingredients for a coating material (not shown) is prepared in a supply tank 15 and is pumped through a supply line 16 by a pump 17 to a feed vessel 18 provided with a mixing blade 18a. Recycled coating material is also supplied to the feed vessel 18 via a supply line 19 as described in more detail below. After thoroughly mixing the recycled material with the fresh mix by means of the blade 18a, the material is fed through a supply line 20 and static mixers 21 by means of a pump 22 to a continuous whipping machine 23 similar to the whipping machine 5 of Fig. 1, air being injected into the material at the desired rate via a supply line 24 to obtain a coating material having the desired flow characteristics. From the whipping machine 23, the coating material is fed through a supply line 25 onto a first conveyor 26 similar to the conveyor 2 shown in Fig. 2 and onto a second conveyor 27 similar to the conveyor 12. Food products (not shown) are coated in the same manner as described with reference to Fig. 2, coating material remaining on the conveyors 26 and 27 after removal of the food products being deposited via supply lines 28 and 29, respectively, (each provided with a control valve 28a and 29a, respectively) in collecting vessels 30 and 31, respectively. Coating material from the collecting vessel 31 is passed through a supply line 32 by a pump 33 into the collecting vessel 30 from where coating material is pumped through a supply line 34 by means of a pump 35 to the upper portion of a deaeration vessel 36. In the de-aeration vessel 36 the coating material is allowed to fall downwards through the vessel onto a plate (not shown) rotating about a vertical axis and surrounded by a screen (not shown). The interior of the vessel 36 is connected to a vacuum pump 37 via a line 38. The coating material 3 is caused to move radially outwards by the plate and, under the action of the centrifugal force imparted to it by the plate, passes through the screen. (The de-aeration vessel 36 may also be used without the screen.) As a result, it is possible to remove substantially all the air from the coating material supplied to the de-aeration vessel 36. The de-aeration vessel 36 may be, for example, one made and sold by Koruma.

From the bottom of the de-aeration vessel 36, de-aerated coating material is fed through the supply line 19 by a pump 39 back to the feed vessel as referred to above, a bleed flow line 40 with a control valve 40a being provided for draining coating material from the system, if required. Pressure gauges 41 are provided in supply lines 34 and 38 and for the de-aeration vessel 36.

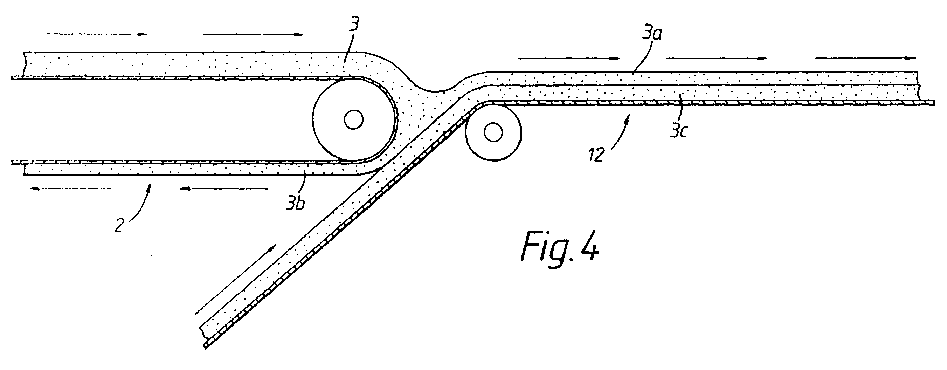

Turning to Fig. 4, in a modification of the second farm of the process shown in and described with reference to Fig. 2, the air knife B of the apparatus of Fig. 2 is omitted and the front of the first conveyor 2 is arranged closer to the second conveyor 12 so that, as is shown diagrammatically in Fig. 4, approximately half the depth of that portion of the layer of coating material 3 in contact with the first conveyor 2 around the food products is transferred onto the second conveyor 12 in addition to the food products themselves and their coverings of the coating material. That half 3a of the layer of the coating material 3 transferred onto the second conveyor 12 is superposed on the layer of coating material 3c already resting on the conveyor 12. The other half 3b of the layer of coating material 3 remaining on the first conveyor 2, which portion of the layer ruptures around each of the food products as they are transferred onto the second conveyor 12, is transported through the gap between the two conveyors for removal from the first conveyor 2 and collection.

From the description of the process with reference to the above Figs., it can be seen how the coating material will behave, at least in an ideal form of the process.

When the coating material is first applied, it meets a surface made up partly of the upper and side surfaces of the food products 1 and partly by regions of the first support surface (the upper run of the conveyor belt 2a) that are not shielded from it by the food products 1. Thus, the coating material, while having sufficient cohesion to remain as a continuous layer, must be able to fold down around each of the food products 1 until it meets The conveyor belt 2a. For that to happen, the layer of coating material must not only be flexible but must, because of the increase in area resulting from the presence of the food products, be able to flow. At the same time, the coating material should not flow so readily that the depth of the layer on the upper surfaces of the food products is significantly reduced as compared with the depth of the layer around and between the food products.

When partially coated food products are removed from the first support surface 2a and placed on the layer of coating material on the second support surface (the upper run of the conveyor belt 12a), it is of course important that the (upper) layer of coating material applied to the food products 1 when they are on the first support surface 2a should remain in place while they are transferred. The upper layer will be kept in place on the food products partly by adhesion and partly by its tendency to retain its partially enclosing configuration.

Lastly, if the desired complete enclosure of the food products 1 by the coating material is to be achieved, the upper layer of coating material that has already been applied to the food products 1 must unite with the layer of coating material on the second support surface 12a. When, as is preferred, the two coating materials are the same, that union will in general be achieved provided that the material has the degree of coherence necessary to ensure the continuity of the upper coating layer as explained above.

It will be seen from the immediately preceding discussion that the important parameters of the coating material are its flow characteristics and its cohesion. In fact, the flow characteristics themselves are complicated and are not entirely independent, for the class of materials under consideration, of the cohesion of the material. Accordingly, the prime requirement for the coating material is that it has appropriate flow characteristics. Fortunately, while the flow characteristics are complicated and difficult to analyse, their suitability for present purposes can be ascertained by a simple test procedure, which makes use of what is sometimes referred to as a "back extrusion" technique.

A sample of viscous coating material that is to be tested is placed in a cylindrical plastics cup, having an internally bevelled open top, and a plunger having a flat circular base is caused to move down within the cup so that the material to be tested is forced to flow upwards through the annular gap between the periphery of the plunger and inner cylindrical surface of the cup.

The cylindrical cup has the following dimensions: external height 75mm, height of base 5mm, internal height from upper surface of base to bottom of bevel 66mm, external diameter 60mm, internal diameter below bevel 50mm and internal diameter at top 57mm. The plunger has a diameter of 45mm and a height of 6mm.

The plunger, which is coaxial with the cup, can be caused to move vertically downwards at a controlled speed and the average resistance encountered by the plunger ascertained. A suitable instrument for that purpose is an instrument known as the Stable Micro Systems Universal TA-XT2 Texture Analyser.

When carrying out the test, a desired test speed, for example, 5mm/s is selected. The instrument then causes the plunger to move downwards, towards the upper surface of the viscous coating material to be tested, at a speed of 2mm/s. When the plunger meets the coating material, it experiences an upward force and, at the position at which the magnitude of that upward force reaches 5 grammes weight (that position being referred to below as "the trigger point"), the speed of movement of the plunger changes to the selected speed. The plunger continues to move downwards until it has penetrated the coating material to a depth of 35mm from the trigger point. The resistance encountered by the plunger during its downward movement is measured by the instrument and the average force over the 33mm of travel of the plunger from a point 2mm below the trigger point to a point 35mm below the trigger point is taken as a measure of the flow characteristics of the material.

Preferably, the test is carried out at three different selected speeds: 2, 5 and 8mm/s, when the average force as defined above should lie within the range of from 0.275 to 0.5, 0.37 to 0.6 and 0.475 to 0.7kg, respectively. It will commonly be found that, if at one of those speeds the average force is close to the middle of the respective range, the average force will be within the respective ranges for the other two speeds. Accordingly, it may suffice to carry out the test at only one of the three speeds.

Whereas, with an unaerated batter, if the average force is above the upper limit, or below the lower limit, of the relevant range, then the ratio of flour to water can be decreased or increased, respectively, in the case of an aerated batter, the average force is sensitive to the degree of aeration, and varying that will usually be the best way of bringing the average force within the relevant range. For example, if the average force determined in the above manner is not high enough and a thicker consistency is required, then the degree of aeration of the batter can be increased by adjusting the operation of the continuous whipping machine 5 as explained above or by increasing the amount of whipping agent in the batter.

The following examples illustrate the invention:

### Example 1:

A batter was prepared by mixing the following ingredients, the percentages given below being by weight and based on the weight of the resultant mix:-

| Ingredient | Percentage |
|---|---|
| Heat-treated Wheat flour | 34.7 |
| Salt | 2.0 |
| Whipping agent | 4.0 |
| Water | 59.3 |

The resultant batter, which thus had one part of flour to 1.71 parts of water, was a liquid having a relatively thin consistency. It was found to have a density of 1.1g/cm³. It was supplied to a Mondomix continuous whipping machine for mechanical aeration. The controls of the machine were adjusted so as to obtain a batter of a thick consistency having a bulk density of 0.43g/cm³ and such flow characteristics that, when measured by a back extrusion technique as described above, the following results were obtained:-

| | | | |
|---|---|---|---|
| Plunger speed (mm/s) | 2 | 5 | 8 |
| Force (kg) | 0.28 | 0.38 | 0.53 |

A sample of the aerated batter was found to contain air cells the majority of which had diameters distributed within the range of from 0.16mm to 0.48mm.

Pieces of frozen chicken were arranged in succession and spaced apart from each other by a distance of approximately 100mm on a first conveyor similar to the first conveyor 2 of Fig. 2 and arranged to run at a speed of 4.7m/min. The aerated batter prepared above was extruded through a fishtail nozzle similar to the nozzle 6 shown in Fig. 2 in a layer of approximately 5mm in depth onto the first conveyor. The layer of batter covered each of the chicken pieces as it passed beneath the nozzle and also covered adjacent regions of the conveyor itself, the pieces of frozen chicken being spaced sufficiently far apart to allow the batter to drop down around each of the chicken pieces and come into contact with and adhere to both the top and the sides of the chicken, and to the conveyor.

At the end of the first conveyor, the partially coated chicken pieces were carried forward onto a second conveyor similar to the conveyor 12 after passing through an air knife to ensure good contact between the batter coating and the pieces of chicken. The batter ruptured around the base of the chicken pieces as they were transferred, the batter adhering to the chicken pieces being carried forward onto the second conveyor and the remaining batter staying on the first conveyor. The radius of curvature of the upper or outer surface of the first conveyor at the junction with the second conveyor was 5mm.

A second layer of the aerated batter of approximately 5mm in depth had already been extruded onto the second conveyor as described with reference to Figs. 1 and 2 before the chicken pieces were deposited onto it from the first conveyor. The second conveyor was travelling at the speed of 3.7m/min. and the gap in a horizontal direction between the outermost surface of the coating material on the first conveyor at the point where it turns down and the outermost surface of the coating material on the second conveyor as it reaches the top of the inclined portion of the second conveyor was 15mm. The aerated batter was found to adhere to the uncoated under-sides of the pieces of chicken and to unite with the batter already on the chicken.

At the end of the second conveyor, the batter-coated pieces of chicken were passed though a crumbing station on a further conveyor and were then inverted into a fryer, where the chicken pieces were flash fried for 40 seconds at an oil temperature of 195°C. Chicken pieces coated in batter having a set foam-like structure were produced. It was found that the batter coating had a light crispy eat.

The batter remaining on the first and second conveyors was recycled, it being first passed through a de-aeration machine similar to the de-aeration vessel 36. The bulk density of the batter on leaving the de-aeration machine was found to be 1.1g/cm³.

### Example 2:

Pieces of frozen fish were arranged in succession and spaced apart from each other by a distance of approximately 150mm, on a first conveyor similar to the first conveyor 2 of Fig. 2 and arranged to run at a speed of 4.7m/min. The aerated batter of Example 1 above was extruded through a fishtail nozzle similar to the nozzle 6 shown in Fig. 2 in a layer of approximately 5mm in depth onto the first conveyor. The layer of batter covered each of the fish pieces as it passed beneath the nozzle and also covered adjacent regions of the conveyor itself, the pieces of frozen fish being spaced sufficiently far apart to allow the batter to drop down around each of the fish pieces and come into contact with and adhere to both the top and the sides of the fish, and to the conveyor.

A second layer of the aerated batter of approximately 5mm in depth was extruded onto a second conveyor similar to, and arranged in the same manner as, the conveyor 12 of Fig. 2, but being arranged nearer to the front end of the first conveyor in a manner similar to that shown in Fig. 4. At the end of the first conveyor, the partially coated fish pieces were carried forward onto the second conveyor. The gap between the first conveyor and the second conveyor was such that the outermost portion (about 2.5mm in depth) of the layer of batter on the first conveyor was transferred to the second conveyor together with the food products and was superposed on the layer of batter already on the second conveyor. The remainder of the batter on the first conveyor, which had ruptured around the base of the fish pieces as they were transferred, stayed on the first conveyor. The radius of curvature of the upper or outer surface of the first conveyor at the junction with the second conveyor was 5mm. The second conveyor was travelling at the speed of 3.7m/min.

The aerated batter was found to adhere to the uncoated under-sides of the pieces of fish and to unite with the batter already on the fish.

At the end of the second conveyor, the batter-coated pieces of fish were passed though a crumbing station on a further conveyor and were then inverted into a fryer, where the coated fish pieces were flash fried for 40 seconds at an oil temperature of 195°C. Fish pieces coated in batter having a set foam-like structure were produced and it was found that the batter coating had a light crispy eat.

The batter remaining on the first and second conveyors was recycled, it being first passed through a de-aeration machine similar to the de-aeration vessel 36. The bulk density of the batter on leaving the de-aeration machine was found to be 1.1g/cm³.

## Claims

1. A process for coating food products, which comprises arranging a succession of food products, spaced apart from each other, on a first support surface, applying a covering layer of a viscous coating material to the food products and to the first support surface so that the coating material adheres to each food product and contacts the first support surface at least over a region surrounding the food product, thereby enclosing the food product between the coating material and the first support surface, applying a layer of viscous coating material so that it rests on a second support surface, removing from the first support surface each food product together with the coating material adhering to it, so placing each partially coated food product on the coating material on the second support surface that the surface of the food product that was resting on the first support surface is in contact with the coating material on the second support surface, the coating material on the second support surface adhering to the partially coated food product and, where it meets it, uniting with the coating material applied to the food product when it was on the first support surface, so that each food product is enrobed in the coating material, and removing the coated food products from the second support surface, the process further comprising mechanically introducing air, or another suitable gas, into the coating material before it is applied to the first and/or second support surfaces.

2. A process as claimed in claim 1, wherein the first support surface is provided by an endless conveyor ("the first conveyor") arranged to transport the food products past a station at which the covering layer of viscous coating material is applied.

3. A process as claimed in claim 2, wherein the first support surface is arranged to pass through a downwardly flowing curtain of air to promote contact between the coating material and the food product and/or between the coating material and the first support surface over a region around each food product.

4. A process as claimed in claim 2 or claim 3, wherein removal of the food products from the first conveyor is effected by arranging for the food products, when they reach the end ("the front end") of the upper run of the first conveyor, to be carried forward onto an adjacent endless conveyor.

5. A process as claimed in claim 4, wherein the said adjacent conveyor is arranged near to, but separated from, the front end of the first conveyor by a gap sufficient to allow the passage through it of the coating material adhering to the first conveyor.

6. A process as claimed in any one of claims 1 to 5, wherein the second support surface is provided by an endless conveyor ("the second conveyor").

7. A process as claimed in claim 4 or claim 5, wherein the conveyor adjacent to the first conveyor is an intermediate transport conveyor arranged to transport the food products to the second support surface.

8. A process as claimed in claim 6 when dependent on claim 4 or claim 5, wherein the adjacent conveyor is the second conveyor and provides the second support surface.

9. A process as claimed in any one of claims 1 to 8, wherein the food products are arranged to pass through a downwardly flowing curtain of air in the region where the food products are removed from the first support surface.

10. A process as claimed in any one of claims 4 to 9, wherein the front end of the first conveyor (or the outermost surface of the coating material on the front end of the first conveyor) is arranged so close to the adjacent conveyor that the portion of the layer of coating material in contact with the first support surface over the region surrounding the food products on the first conveyor, or at least the outermost part of the depth of that portion of the layer, is tranferred together with the partially coated food products onto the adjacent conveyor.

11. A process as claimed in claim 10, wherein approximately the outermost half of the depth of the layer is transferred from the first conveyor to the adjacent conveyor.

12. A process as claimed in any one of claims 4 to 11, wherein the adjacent conveyor moves at a slower speed than the first conveyor.

13. A process as claimed in any one of claims 4 to 12, wherein the adjacent conveyor is a transfer conveyor and the second conveyor moves at a slower speed than the transfer conveyor.

14. A process as claimed in any one of claims 2 to 13, wherein the radius of curvature of the outer surface of the first conveyor where it turns downwards at the front end does not exceed 7mm and, preferably, does not exceed 5mm.

15. A process as claimed in any one of claims 1 to 14, wherein the coating material applied to the second support surface is of the same chemical composition as that applied to the first support surface, and is, preferably, derived from the same source of coating material.

16. A process as claimed in any one of claims 1 to 15, wherein the food products are removed from the second support surface by arranging for them to be carried forward onto another conveyor.

17. A process as claimed in any one of claims 1 to 16, wherein the food products are arranged to pass through a downwardly flowing curtain of air on removal from the second support surface.

18. A process as claimed in any one of claims 1 to 17, wherein the air or other suitable gas is mechanically introduced into the coating material by supplying coating material to a machine in which the material is whipped as it passes through the machine while the air or other suitable gas is injected into the material.

19. A process as claimed in claim 18, wherein the coating material contains a whipping agent.

20. A process as claimed in any one of claims 1 to 19, wherein, on application to the food product, the coating material contains cells of air or other suitable gas at least the majority of which have diameters within the range of from 0.15mm to 0.50mm.

21. A process as claimed in any one of claims 1 to 20, wherein the bulk density of the aerated coating material is within the range of from 0.40 to 0.50g/cm³.

22. A process as claimed in any one of claims 1 to 21, wherein the coating material remaining on the first and second support surfaces after removal of the food products is recycled.

23. A process as claimed in claim 22, wherein the air or other suitable gas in the coating material to be recycled is substantially removed, or at least its content is considerably decreased, before once again introducing air or another suitable gas into the coating material and reapplying the coating material.

24. A process as claimed in any one of claims 1 to 23, wherein the or each coating material is a batter.

25. A process as claimed in claim 24, wherein the batter contains one part by weight of heat-treated flour to from 1.26 to 2.01 parts by weight of water.

26. A process as claimed in claim 24 or claim 25, wherein the batter contains a whipping agent.

27. A process as claimed in claim 26, wherein the whipping agent is within the range of from 2% to 4% by weight and based on the weight of the batter.

28. A process as claimed in any one of claims 1 to 27, wherein the food products are made from chicken.

29. A process as claimed in any one of claims 1 to 27, wherein the food products are made from fish.

30. A process as claimed in any one of claims 1 to 27, wherein the coated food products have a layer of crumbs applied to them after removal from the second support surface.

31. A process as claimed in any one of claims 1 to 30, wherein the coated food products are subjected to a further treatment step after removal from the second support surface to set at least the outer layer of the coating material.

32. A process as claimed in claim 31, wherein the coated food products are frozen.

33. A process as claimed in claim 31, wherein the coated food products are flash-fried.

34. A process as claimed in claim 33, wherein the coated food products are inverted on entry to a fryer.

## Patentansprüche

1. Verfahren zur Beschichtung von Nahrungsmitteln mit den Verfahrensschritten:
Anordnen einer Folge von voneinander beabstandeten Nahrungsmitteln auf einer ersten Unterstützungsfläche,
Auftragen einer abdeckenden Schicht aus einem viskosen Überzugsmaterial auf die Nahrungsmittel und die erste Unterstützungsfläche, so daß das Überzugsmaterial an jedem Nahrungsmittel anhaftet und die erste Unterstützungsfläche zumindest in einer das Nahrungsmittel umgebenden Region berührt, wodurch das Nahrungsmittel zwischen dem Überzugsmaterial und der ersten Unterstützungsfläche eingeschlossen wird,
Auftragen einer Schicht aus viskosem Überzugsmaterial, so daß es auf einer zweiten Unterstützungsfläche aufliegt,
Entfernen jedes Nahrungsmittels von der ersten Unterstützungsfläche zusammen mit dem daran haltenden Überzugsmaterial,
Anordnen jedes zum Teil beschichteten Nahrungsmittels auf dem Überzugsmaterial auf der zweiten Unterstützungsfläche, so daß die Oberfläche des Nahrungsmittels, die auf der ersten Unterstützungsfläche aufgelegen hat, mit dem Überzugsmaterial auf der zweiten Unterstützungsfläche in Berührung kommt, wobei das Überzugsmaterial auf der zweiten Unterstützungsfläche an dem teilweise beschichteten Nahrungsmittel anhaftet und sich mit dem Überzugsmaterial, das auf das Nahrungsmittel aufgetragen wurde als es auf der ersten Unterstützungsfläche war, wo sie sich berühren verbindet, so daß jedes Nahrungsmittel von dem Überzugsmaterial umhüllt ist, und
Entfernen des beschichteten Nahrungsmittels von der zweiten Unterstützungsfläche, wobei das Verfahren ferner ein mechanisches Zuführen von Luft oder eines anderen geeigneten Gases in das Überzugsmaterial umfaßt, bevor dieses auf die erste und/oder zweite Unterstützungsfläche aufgetragen wird.

2. Verfahren nach Anspruch 1, bei dem die erste Unterstützungsfläche von einem endlosen Förderband gebildet wird ("das erste Förderband"), das derart angeordnet ist, das die Nahrungsmittel entlang einer Station transportiert werden, bei der die abdeckende Schicht aus viskosem Überzugsmaterial aufgetragen wird.

3. Verfahren nach Anspruch 2, bei dem die erste Unterstützungsfläche derart angeordnet ist, daß sie sich durch einen nach unten strömenden Vorhang aus Luft erstreckt, so daß der Kontakt zwischen dem Überzugsmaterial und dem Nahrungsmittel und/oder zwischen dem Überzugsmaterial und der ersten Unterstützungsfläche in einer Region um jedes Nahrungsmittel unterstützt wird.

4. Verfahren nach einem der Ansprüche 2 oder 3, bei dem das Entfernen der Nahrungsmittel von dem ersten Förderband durch Anordnen der Nahrungsmittel bewirkt wird, so daß diese, wenn sie das Ende ("das vordere Ende") des oberen Trums des ersten Förderbandes erreichen, nach vorne auf eine benachbartes endloses Förderband transportiert werden.

5. Verfahren nach Anspruch 4, bei dem das benachbarte Förderband nahe bei, aber durch eine Lücke separiert von dem vorderen Ende des ersten Förderbandes angeordnet ist, wobei die Lücke ausreichend groß ist, um den Durchgang des an dem ersten Förderband haftenden Überzugsmaterials zu ermöglichen.

6. Verfahren nach einem Ansprüche 1 bis 5, bei dem die zweite Unterstützungsfläche von einem endlosen Förderband ("das zweite Förderband") gebildet wird.

7. Verfahren nach einem der Ansprüche 4 oder 5, bei dem das dem ersten Förderband benachbarte Förderband ein Zwischentransport-Förderband ist, daß derart angeordnet ist, daß die Nahrungsmittel zu der zweiten Unterstützungsfläche transportiert werden.

8. Verfahren nach Anspruch 6, sofern dieser auf Anspruch 4 oder 5 zurückbezogen ist, bei dem das benachbarte Förderband das zweite Förderband ist und die zweite Unterstützungsfläche bereitstellt.

9. Verfahren nach einem der Ansprüche 1 bis 8, bei dem die Nahrungsmittel derart angeordnet sind, daß diese durch einen nach unten strömenden Vorhang aus Luft in dem Bereich verfahren, wo die Nahrungsmittel von der ersten Unterstützungsfläche entfernt werden.

10. Verfahren nach einem der Ansprüche 4 bis 9, bei dem das vordere Ende des ersten Förderbandes (oder die äußerste Fläche des Überzugsmaterials auf dem vorderen Ende des ersten Förderbandes) so nah an dem benachbarten Förderband angeordnet ist, daß die Position der Schicht aus Überzugsmaterial, die die erste Unterstützungsfläche über den Bereich berührt, der die Nahrungsmittel auf dem ersten Förderband umgibt, oder zumindest der äußerste Teil der Dicke dieses Teiles der Schicht zusammen mit dem teilweise beschichteten Nahrungsmitteln auf das benachbarte Förderband übertragen wird.

11. Verfahren nach Anspruch 10, bei dem annähernd die äußerste Hälfte der Dicke der Schicht von dem ersten Förderband zu dem benachbarten Förderband übertragen wird.

12. Verfahren nach einem der Ansprüche 4 bis 11, bei dem das benachbarte Förderband mit einer niedrigeren Geschwindigkeit als das erste Förderband betrieben wird.

13. Verfahren nach einem der Ansprüche 4 bis 12, bei dem das benachbarte Förderband ein Übertragungsförderband ist und das zweite Förderband mit einer geringeren Geschwindigkeit als das Übertragungsförderband betrieben wird.

14. Verfahren nach einem der Ansprüche 2 bis 13, bei dem der Radius der Krümmung der äußeren Oberfläche des ersten Förderbandes, wo dieses ein dem vorderen Ende nach unten dreht, nicht größer als 7 mm, vorzugsweise nicht größer als 5 mm ist.

15. Verfahren nach einem der Ansprüche 1 bis 14, bei dem das Überzugsmaterial, das auf die zweite Unterstützungsfläche aufgetragen wurde, die gleiche chemische Zusammensetzung wie das Überzugsmaterial, das auf die erste Unterstützungsfläche aufgetragen wurde, aufweist und vorzugsweise aus derselben Quelle von Überzugsmaterial geschöpft wurde.

16. Verfahren nach einem der Ansprüche 1 bis 15, bei dem die Nahrungsmittel von der zweiten Unterstützungsfläche entfernt werden, indem diese derart angeordnet werden, daß sie nach vorne auf eine anderes Förderband getragen werden.

17. Verfahren nach einem der Ansprüche 1 bis 16, bei dem die Nahrungsmittel derart angeordnet sind, daß diese beim Entfernen von der zweiten Unterstützungsfläche einen nach unten strömenden Vorhang von Luft passieren.

18. Verfahren nach einem der Ansprüche 1 bis 17, bei dem die Luft oder anderes geeignetes Gas mechanisch durch Beschicken einer Maschine in das Überzugsmaterial eingeführt wird, in der das Material geschlagen wird, wenn es die Maschine passiert, wobei die Luft oder anderes geeignetes Gas in das Material eingespritzt wird.

19. Verfahren nach Anspruch 18, bei dem das Überzugsmaterial ein Schlagmittel beinhaltet.

20. Verfahren nach einem der Ansprüche 1 bis 19, bei dem das Überzugsmaterial beim Auftragen auf das Nahrungsmittel Hohlräume von Luft oder anderer geeigneter Gase enthält, von denen zumindest der Großteil einen Durchmesser zwischen 0,15 mm bis 0,50 mm aufweist.

21. Verfahren nach einem der Ansprüche 1 bis 20, bei dem die Schüttdichte des gelüfteten Überzugsmaterials zwischen 0,40 bis 0,50 g/cm³ beträgt.

22. Verfahren nach einem der Ansprüche 1 bis 21, bei dem das auf den ersten und zweiten Unterstützungsflächen verbleibende Überzugsmaterial nach dem Entfernen der Nahrungsmittel wieder verwertet wird.

23. Verfahren nach Anspruch 22, bei dem die Luft oder das andere geeignete Gas in dem wieder zu verwertenden Überzugsmaterial im wesentlichen entfernt oder zumindest dessen Gehalt beträchtlich reduziert wird, bevor erneut Luft oder ein anderes geeignetes Gas in das Überzugsmaterial eingeleitet und das Überzugsmaterial wieder aufgetragen wird.

24. Verfahren nach einem der Ansprüche 1 bis 23, bei dem das oder jedes Überzugsmaterial ein Teig ist.

25. Verfahren nach Anspruch 24, bei dem der Teig einen Gewichtsanteil hitzebehandelten Mehls und rund 1,26 bis 2,01 Gewichtsanteile Wasser umfaßt.

26. Verfahren nach einem der Ansprüche 24 oder 25, bei dem der Teig ein Schlagmittel beinhaltet.

27. Verfahren nach Anspruch 26, bei dem der Anteil des Schlagmittels zwischen 2% und 4% des Gewichts liegt und auf dem Gewicht des Teigs basiert.

28. Verfahren nach einem der Ansprüche 1 bis 27, bei dem die Nahrungsmittel aus Huhn hergestellt sind.

29. Verfahren nach einem der Ansprüche 1 bis 27, bei dem die Nahrungsmittel aus Fisch hergestellt sind.

30. Verfahren nach einem der Ansprüche 1 bis 27, bei dem die beschichteten Nahrungsmittel eine Schicht aus Krümeln aufweisen, die nach dem Entfernen von der zweiten Unterstützungsfläche aufgetragen wurde.

31. Verfahren nach einem der Ansprüche 1 bis 30, bei dem die beschichteten Nahrungsmittel einem weiteren Behandlungsschnitt nach dem Entfernen von der zweiten Unterstützungsfläche unterzogen werden, um zumindest die äußere Schicht des Überzugsmaterials zu verfestigen.

32. Verfahren nach Anspruch 31, bei dem die beschichteten Nahrungsmittel gefroren werden.

33. Verfahren nach Anspruch 31, bei dem die beschichteten Nahrungsmittel schnell gebraten werden.

34. Verfahren nach Anspruch 33, bei dem die beschichteten Nahrungsmittel bei Eintritt in einen Ofen gewendet werden.

## Revendications

1. Procédé d'enrobage de produits alimentaires, qui comprend l'agencement d'une succession de produits alimentaires, espacés les uns des autres, sur une première surface de support, l'application d'une couche de recouvrement d'un matériau d'enrobage visqueux sur les produits alimentaires et sur la première surface de support de sorte que le matériau d'enrobage adhère sur chaque produit alimentaire et vienne en contact avec la première surface de support au moins sur une région entourant le produit alimentaire, en enfermant ainsi le produit alimentaire entre le matériau d'enrobage et la première surface de support, l'application d'une couche de matériau d'enrobage visqueux de sorte qu'elle repose sur une seconde surface de support, l'enlèvement depuis la première surface de support de chaque produit alimentaire en même temps que du matériau d'enrobage qui adhère à celle-ci, le placement de chaque produit alimentaire partiellement enrobé sur le matériau d'enrobage sur la seconde surface de support de telle sorte que la surface du produit alimentaire qui reposait sur la première surface de support se trouve en contact avec le matériau d'enrobage sur la seconde surface de support, le matériau d'enrobage sur la seconde surface de support adhérant au produit alimentaire partiellement enrobé et, là où il le rejoint, la réunion avec le matériau d'enrobage appliqué sur le produit alimentaire lorsqu'il était sur la première surface de support, de sorte que chaque produit alimentaire est enrobé dans le matériau d'enrobage, et l'enlèvement des produits alimentaires enrobés depuis la seconde surface de support, le procédé comprenant en outre une introduction mécanique d'air, ou d'un autre gaz approprié, dans le matériau d'enrobage avant qu'il soit appliqué sur les première et/ou seconde surfaces de support.

2. Procédé selon la revendication 1, dans lequel la première surface de support est réalisée par un convoyeur sans fin ("le premier convoyeur") agencé pour transporter les produits alimentaires devant un poste au niveau duquel la couche de recouvrement de matériau d'enrobage visqueux est appliquée.

3. Procédé selon la revendication 2, dans lequel la première surface de support est agencée pour passer au travers d'un rideau d'air s'écoulant vers le bas en vue de favoriser un contact entre le matériau d'enrobage et le produit alimentaire et/ou entre le matériau d'enrobage et la première surface de support sur une région autour de chaque produit alimentaire.

4. Procédé selon la revendication 2 ou la revendication 3, dans lequel l'enlèvement des produits alimentaires depuis le premier convoyeur est effectué en s'arrangeant pour que les produits alimentaires, lorsqu'ils atteignent l'extrémité ("l'extrémité avant") de la course supérieure du premier convoyeur, soient transportés vers l'avant jusque sur un convoyeur sans fin adjacent.

5. Procédé selon la revendication 4, dans lequel ledit convoyeur adjacent est agencé à proximité de l'extrémité avant du premier convoyeur mais est séparé de celle-ci par un intervalle suffisant pour permettre le passage à travers celui-ci du matériau d'enrobage adhérant au premier convoyeur.

6. Procédé selon l'une quelconque des revendications 1 à 5, dans lequel la seconde surface de support est réalisée par un convoyeur sans fin ("le second convoyeur").

7. Procédé selon la revendication 4 ou la revendication 5, dans lequel le convoyeur adjacent au premier convoyeur est un convoyeur de transport intermédiaire agencé pour transporter les produits alimentaires vers la seconde surface de support.

8. Procédé selon la revendication 6, lorsqu'elle dépend de la revendication 4 ou de la revendication 5, dans lequel le convoyeur adjacent est le second convoyeur et fournit la seconde surface de support.

9. Procédé selon l'une quelconque des revendications 1 à 8, dans lequel les produits alimentaires sont agencés pour passer au travers d'un rideau d'air s'écoulant vers le bas dans la région où les produits alimentaires sont enlevés de la première surface de support.

10. Procédé selon l'une quelconque des revendications 4 à 9, dans lequel l'extrémité avant du premier convoyeur (ou bien la surface la plus externe du matériau d'enrobage sur l'extrémité avant du premier convoyeur) est disposée si près du convoyeur adjacent que la partie de la couche de matériau d'enrobage en contact avec la première surface de support sur la région entourant les produits alimentaires sur le premier convoyeur, ou au moins la partie la plus externe de l'épaisseur de cette partie de la couche, est transférée en même temps que les produits alimentaires partiellement enrobés jusque sur le convoyeur adjacent.

11. Procédé selon la revendication 10, dans lequel approximativement la moitié la plus externe de l'épaisseur de la couche est transférée depuis le premier convoyeur vers le convoyeur adjacent.

12. Procédé selon l'une quelconque des revendications 4 à 11, dans lequel le convoyeur adjacent se déplace à une vitesse plus lente que le premier convoyeur.

13. Procédé selon l'une quelconque des revendications 4 à 12, dans lequel le convoyeur adjacent est un convoyeur de transfert et le second convoyeur se déplace à une vitesse plus lente que le convoyeur de transfert.

14. Procédé selon l'une quelconque des revendications 2 à 13, dans lequel le rayon de courbure de la surface extérieure du premier convoyeur lorsqu'il bifurque vers le bas au niveau de l'extrémité avant ne dépasse pas 7 mm et, de préférence, ne dépasse pas 5 mm.

15. Procédé selon l'une quelconque des revendications 1 à 14, dans lequel le matériau d'enrobage appliqué sur la seconde surface de support est de même composition chimique que celui appliqué sur la première surface de support et est de préférence issu de la même source de matériau d'enrobage.

16. Procédé selon l'une quelconque des revendications 1 à 15, dans lequel les produits alimentaires sont enlevés de la seconde surface de support en s'arrangeant pour qu'ils soient transportés vers l'avant jusque sur un autre convoyeur.

17. Procédé selon l'une quelconque des revendications 1 à 16, dans lequel les produits alimentaires sont agencés pour passer au travers d'un rideau d'air s'écoulant vers le bas lors de l'enlèvement depuis la seconde surface de support.

18. Procédé selon l'une quelconque des revendications 1 à 17, dans lequel l'air ou autre gaz approprié est introduit mécaniquement dans le matériau d'enrobage en introduisant le matériau d'enrobage dans une machine dans laquelle le matériau est fouetté lorsqu'il passe dans la machine tandis que l'air ou autre gaz approprié est injecté dans le matériau.

19. Procédé selon la revendication 18, dans lequel le matériau d'enrobage contient un agent aidant à fouetter.

20. Procédé selon l'une quelconque des revendications 1 à 19, dans lequel, lors de l'application sur le produit alimentaire, le matériau d'enrobage contient des cellules d'air ou autre gaz approprié dont au moins la majorité présente des diamètres à l'intérieur de la plage allant de 0,15 mm à 0,50 mm.

21. Procédé selon l'une quelconque des revendications 1 à 20, dans lequel la masse volumique apparente du matériau d'enrobage aéré est à l'intérieur de la plage allant de 0,40 à 0,50 g/cm³.

22. Procédé selon l'une quelconque des revendications 1 à 21, dans lequel le matériau d'enrobage restant sur les première et seconde surfaces de support après l'enlèvement des produits alimentaires est recyclé.

23. Procédé selon la revendication 22, dans lequel l'air ou autre gaz approprié dans le matériau d'enrobage devant être recyclé est pratiquement éliminé, ou au moins sa teneur est considérablement diminuée, avant d'introduire une nouvelle fois de l'air ou autre gaz approprié dans le matériau d'enrobage et de réappliquer le matériau d' enrobage.

24. Procédé selon l'une quelconque des revendications 1 à 23, dans lequel le matériau d'enrobage ou bien chaque matériau d'enrobage est une pâte à frire.

25. Procédé selon la revendication 24, dans lequel la pâte à frire contient une partie en poids de farine traitée à chaud pour 1,26 à 2,01 parties en poids d'eau.

26. Procédé selon la revendication 24 ou la revendication 25, dans lequel la pâte à frire contient un agent aidant à fouetter.

27. Procédé selon la revendication 26, dans lequel l'agent aidant à fouetter est à l'intérieur de la plage allant de 2 % à 4 % en poids et sur la base du poids de la pâte à frire.

28. Procédé selon l'une quelconque des revendications 1 à 27, dans lequel les produits alimentaires sont réalisés à partir de poulet.

29. Procédé selon l'une quelconque des revendications 1 à 27, dans lequel les produits alimentaires sont réalisés à partir de poisson.

30. Procédé selon l'une quelconque des revendications 1 à 27, dans lequel les produits alimentaires enrobés comportent une couche de chapelure appliquée sur ceux-ci après l'enlèvement depuis la seconde surface de support.

31. Procédé selon l'une quelconque des revendications 1 à 30, dans lequel les produits alimentaires enrobés sous soumis à une étape de traitement supplémentaire après l'enlèvement depuis la seconde surface de support afin de fixer au moins la couche externe du matériau d'enrobage.

32. Procédé selon la revendication 31, dans lequel les produits alimentaires enrobés sont congelés.

33. Procédé selon la revendication 31, dans lequel les produits alimentaires enrobés sont frits rapidement.

34. Procédé selon la revendication 33, dans lequel les produits alimentaires enrobés sont retournés lors de l'entrée dans une friteuse.
